# EUROPÄISCHE PATENTANMELDUNG

(11) **EP 1 150 480 A1**
(43) Veröffentlichungstag der Anmeldung: **31.10.2001**
(21) Anmeldenummer: 00109307.9
(22) Anmeldetag: 29.04.2000
(51) Int. Cl.: H04M 3/51, H04M 7/00

(54) **Verfahren und System zur Steuerung einer Kommunikationsanwendung**

(71) Anmelder: DIATEL DIREKT Kommunikations-AG, 60323 Frankfurt am Main (DE)
(72) Erfinder: Knoll, Stefan.M, 12203 Berlin (DE); Vogel, Philipp J.N., 60596 Frankfurt (DE); Ganzert, Alexander M., 60596 Frankfurt (DE)
(74) Vertreter: KEIL & SCHAAFHAUSEN

(57) **Zusammenfassung**

Bei einem Verfahren zur Steuerung einer Kommunikationsanwendung (2), bei der von einer zentralen Stelle eine Kommunikationsverbindung zu einer Vielzahl von Kontaktpunkten hergestellt wird, insbesondere eines Call-, Brief- oder Mailing-Centers, greift ein Anwender (4) über ein externes Netzwerk (6) auf eine zentrale Programmanwendung (3) zu, die die Aufträge des Anwenders (4) annimmt und als Steuerungsbefehle zu der Kommunikationsanwendung (2) überträgt.

## Beschreibung

Die Erfindung betrifft ein Verfahren und ein System zur Steuerung einer Kommunikationsanwendung, bei der von einer zentralen Stelle eine Kommunikationsverbindung zu einer Vielzahl von Kontaktpunkten hergestellt wird, insbesondere eines Call-, Brief- oder Mailing-Centers.

In den letzten Jahren hat sich das Telefonmarketing als wirksames Instrument zur Vertriebsunterstützung und Kundenbindung von Unternehmen etabliert. Insbesondere Versicherungs- und Finanzdienstleistungsunternehmen beauftragen Kommunikationsdienstleister damit, die Kunden der Unternehmen anzurufen, um die Zufriedenheit der Kunden mit dem Unternehmen zu erfragen, neue Produkte vorzustellen und/oder Termine für Besuche von Außendienstmitarbeitern zu vereinbaren. Außerdem werden in zentral gesteuerten Mailing-Aktionen dem bestehenden Kundenstamm oder von Adressdatenbanken zur Verfügung gestellten Adressen potentieller Neukunden bspw. Werbeunterlagen übermittelt.

Das Telefonmarketing erfolgt im Wesentlichen über sog. Call-Center, in denen Mitarbeiter der Kommunikationsdienstleister anhand vorgegebener Listen Kunden anrufen und die Telefongespräche meist nach ebenfalls vorgegebenen Schemata führen. Insbesondere bei der Terminvereinbarung werden die Kundendaten bisher vom Auftraggeber dem Kommunikationsdienstleister mitgeteilt, der sie in eine Datenbank einstellt. Aus den Kundendaten werden dann sog. Streichungslisten generiert, von denen die einzelnen Außendienstmitarbeiter des Auftraggebers individuell Kunden streichen können. Diese Listen werden den Außendienstmitarbeitern dann per Fax oder Post in Papierform übermittelt, von diesen manuell überarbeitet und wieder an den Kommunikationsdienstleister zurückgeschickt. Anschließend werden die Streichungslisten manuell in die Datenbank eingepflegt, um letztlich nach vielen zeitaufwendigen Einzelschritten für die Kommunikationsanwendung zur Verfügung zu stehen. Dann rufen die Telefonberater des Call-Centers die Kunden aus der Datenbank an, bis alle Kunden erreicht sind oder die Aktion abgebrochen wird. Dieses Verfahren, das ähnlich auch bei anderen Kommunikationsanwendungen wie Brief- oder Mailing-Centern angewendet wird, ist zeit- und arbeitsintensiv, fehlerträchtig und erlaubt nur in geringem Maße, auf die Wünsche einzelner Außendienstmitarbeiter als Anwender der Kommunikationsanwendung einzugehen.

Daher ist es Aufgabe der vorliegenden Erfindung, eine Steuerung für eine Kommunikationsanwendung vorzusehen, die einfach und zuverlässig zu handhaben ist und einen hohen Individualisierungsgrad bei schneller Umsetzung der individuellen Wünsche der Anwender ermöglicht.

Diese Aufgabe wird mit der Erfindung durch ein Verfahren gelöst, bei dem ein Anwender über ein externes Netzwerk, insbesondere das Internet auf eine mit der Kommunikationsanwendung verbindbare zentrale Programmanwendung zugreift, wobei die zentrale Programmanwendung Aufträge des Anwenders annimmt und als Steuerungsbefehle zu der Kommunikationsanwendung überträgt, und wobei die Steuerungsbefehle von der Kommunikationsanwendung ausgeführt werden. Die Kommunikationsanwendung ist eine Einrichtung, mit der ein Unternehmen bzw. der Anbieter eines Produktes eine Vielzahl von möglichen Kunden (Kontaktpunkte) ansprechen und informieren kann. Dazu zählen Call-, Brief- und Mailing-Center, aber auch andere Einrichtungen, die bspw. Werbeaktionen durchführen. Das Telefongespräch bzw. die Brief- oder Postversendung wird hierbei als Kommunikationsverbindung im Sinne der vorliegenden Erfindung angesehen.

Bei dem erfindungsgemäßen Verfahren wird mit der zentralen Programmanwendung eine zentrale Kommunikations- und Steuerschnittstelle zur Verfügung gestellt, auf die der Anwender über das externe Netzwerk, bspw. das Internet, zugreift und über das er die Kommunikationsanwendung unmittelbar ohne einen weiteren Eingriff von außen, bspw. durch einen Mitarbeiter des Telekommunikationsdienstleisters, steuern kann. Die Kommunikationsanwendung kann nach Übermittlung des Auftrags von dem Anwender unverzüglich mit dem Abarbeiten des Auftrags beginnen, so dass eine Echtzeit-Steuerung möglich ist. Dabei muss der Anwender keine komplizierte Befehlssprache der Kommunikationsanwendung beherrschen, sondern kann ihm von der Programmanwendung bereitgestellte, leicht verständliche Befehle verwenden, die dann von der zentralen Programmanwendung in die speziellen Befehle zur Steuerung der Kommunikationsanwendung umgesetzt werden.

Vorzugsweise startet, unterbricht oder beendet die zentrale Programmanwendung Aktionen einer Kommunikationsanwendung, wobei die jeweiligen Aktionen selbst von der Kommunikationsanwendung möglichst eigenständig ausgeführt werden. Auf diese Weise bilden die Kommunikationsanwendungen selbständige Anwendungen, die über eine Befehlsschnittstelle zwar von der zentralen Programmanwendung aus gesteuert werden können, jedoch auch eigenständig betreibbar sind.

Zusätzlich zu der reinen Steuerung der Kommunikationsanwendung ist vorgesehen, dass Informationen aus der Kommunikationsanwendung, wie Ereignisse, Termine oder Statistiken, an die zentrale Programmanwendung übermittelt werden und dort von dem Anwender abrufbar sind. Alle gewonnenen Informationen werden vorzugsweise unmittelbar übermittelt, so dass der Anwender jederzeit die Möglichkeit hat, sich über den Status sowie Zwischenergebnisse der Kommunikationsaktion zu informieren. Diese Informationen werden ihm von der zentralen Programmanwendung bspw. über das Internet als externes Netzwerk direkt auf seinen Bildschirmarbeitsplatz übertragen und können dort ausgewertet werden.

Eine besonders gute Organisation lässt sich erreichen, wenn an die zentrale Programmanwendung eine Datenbank angeschlossen ist, auf die der Anwender und/oder die Kommunikationsanwendung über die zentrale Programmanwendung zum Eingeben und Abrufen von Informationen zugreifen können. In einer Datenbank lassen sich die Daten bspw. nach bestimmten Kriterien einfach gruppieren oder umsortieren, so dass die Programmanwendung dem Anwender die Daten in einer für ihn optimalen Form zur Verfügung stellen kann. Außerdem kann vorgesehen sein, dass der Anwender bestimmte Daten selektiv ändern kann, wobei die Daten anschließend der Kommunikationsanwendung sofort aktualisiert zur Verfügung stehen.

Zusätzlich kann vorgesehen sein, dass die Daten durch einen direkten Zugang zu der Datenbank importiert, aktualisiert und/oder exportiert werden, damit ein Unternehmen, bspw. ein Versicherungsunternehmen, die Kundendaten einfach auf die Datenbank einspielen und ggf. Vertragsänderungen oder dgl. aktualisieren kann. Umgekehrt können in der Kommunikationsanwendung gewonnene Informationen, wie bspw. Adressänderungen oder Interesse an bestimmten Produkten, zu dem Unternehmen exportiert werden, so dass auch dieses anschließend über einen aktualisierten Kundendatensatz verfügt.

Um eine Vielzahl verschiedener Anwender oder mehrere Aufträge eines Anwenders einfach verarbeiten zu können, ist erfindungsgemäß vorgesehen, dass die zentrale Programmanwendung verschiedene Projekte eines oder mehrerer Anwender verwaltet, indem jedem Projekt bestimmte Informationen sowie ein definierter Projektstatus zugeordnet werden, wobei der Projektstatus die Bearbeitung des Projektes in der Programmanwendung und der Kommunikationsanwendung vorgibt. Als Status kann bspw. vorgesehen werden: "buchbar" für ein Projekt, das in der zentralen Programmanwendung bereits vordefiniert ist; "gebucht" für ein von dem Anwender für die Kommunikationsanwendung bestelltes Projekt; "Kundendaten bearbeiten" für ein Projekt, bei dem die Kundendaten von dem Anwender noch bearbeitet werden müssen; "Warten auf Projektstart" für in der Kommunikationsanwendung auf den Start wartende Projekte; "aktiv" für laufende Projekte, "unterbrochen" für angehaltene Projekte und "Projekt beendet" für in der Kommunikationsanwendung abgeschlossene Projekte.

Vorzugsweise sind die Projekte eines Anwenders von dem Anwender selbst in der zentralen Programmanwendung definierbar, buchbar und/oder kontrollierbar. So kann er bspw. bei einem Projekt die Kriterien für das Zusammenstellen der Daten, bspw. Kundendaten, vorgeben, und entscheiden, ob, wann und wie das Projekt ausgeführt werden soll. Dazu hat der Anwender Zugriff auf den Projektstatus und kann diesen nach seinen Wünschen ändern. Dabei können in der zentralen Programmanwendung auch Kontrollfunktionen vorgesehen werden, die vorschreiben, dass ein bestimmter Projektstatus, bspw. "Warten auf Projektstart", nur aktivierbar ist, wenn bestimmte Aktionen, bspw. "Kundendaten bearbeiten", zuvor ausgeführt wurden.

Erfindungsgemäß können in der zentralen Programmanwendung auch Projekte vordefiniert sein und einer Vielzahl von Anwendern zur Verfügung gestellt werden. Dies bietet sich an, wenn bspw. ein großes Versicherungsunternehmen seinen Mitarbeitern im Außendienst (Anwendern) Produkte für spezielle Zielgruppen zur Verfügung stellt. Dann muss nicht jeder Anwender ein darauf ausgerichtetes Projekt selbst definieren, sondern kann auf vordefinierte Projekte zurückgreifen.

Insbesondere bei Außendienstmitarbeitern ist es sinnvoll, wenn die zentrale Programmanwendung eine Terminplanung für den Anwender aufweist, bei der dieser eine Terminmaske mit als frei markierten Zeiten vorgibt, wobei diese Terminmaske als Steuerungsparameter zur Kommunikationsanwendung übertragen wird, so dass von der Kommunikationsanwendung nur noch die als frei markierten Termine vergebbar sind. Ergänzend ist erfindungsgemäß vorgesehen, dass die vergebenen Termine geographischen Regionen zugeordnet werden und dass zusätzliche Termine in zeitlicher und geographischer Zuordnung zu den bereits vergebenen Terminen vergeben werden. So kann bspw. ein Außenmitarbeiter seine Termine individuell von der Kommunikationsanwendung, bspw. durch Telefonberater in einem Call-Center, erstellen lassen, und den zeitlichen Rahmen und die Region für die zu vereinbarenden Termine selbst vergeben. Die Programmanwendung kann auf der Basis dieser Informationen durch gezielte Terminvorgabe eine optimale Routenplanung gewährleisten.

In Weiterführung des Erfindungsgedankens ist vorgesehen, dass die zentrale Programmanwendung mehrere Kommunikationsanwendungen steuert. In diesem Fall steht dem Anwender mit der zentralen Programmanwendung eine Kommunikations- und Steuerplattform zur Verfügung, von der aus er mehrere, auch unterschiedliche, Kommunikationsanwendungen gleichermaßen steuern kann. Sie dient ihm als Portal-Zugang zu Call-, Brief- und Mailing-Centern oder vergleichbaren Kommunikationsanwendungen, mit der er eine Vielzahl von Personen ansprechen kann. Dabei kann vorgesehen werden, dass der Anwender auch für unterschiedliche Kommunikationsanwendungen dieselben Befehle verwendet, die von der zentralen Programmanwendung in die der jeweiligen Kommunikationsanwendung entsprechenden Steuerbefehle umgewandelt werden.

Das zuvor beschriebende Verfahren kann als Computerprogramm mit Programmencode-Mitteln realisiert sein, wenn das Programm auf einem Computer oder Computernetzwerk ausgeführt wird. Insbesondere kann das Computerprogramm auf einem computerlesbaren Datenträger gespeichert sein.

Ferner bezieht sich die Erfindung auf ein System zur Steuerung einer Kommunikationsanwendung, wie Call-, Brief- oder Mailing-Center, mit einer zentralen Kommunikations- und Steuerschnittstelle, die über ein externes Netzwerk mit einem Terminal eines Anwenders verbindbar ist und an die eine Kommunikationsanwendung anschließbar ist, wobei die zentrale Kommunikations- und Steuerschnittstelle ein Kommunikationsmodul zum Datenaustausch mit dem Terminal des Anwenders, ein Steuermodul zur Übermittlung von in der Kommunikationsanwendung auszuführenden Steuerungsbefehlen und ein Übersetzungsmodul zum Übersetzen von Aufträgen des Anwenders in Steuerungsbefehle für die Kommunikationsanwendung aufweist. Mit einem derartigen System lässt sich das zuvor beschriebene Verfahren besonders gut ausführen.

Zur Verwaltung von Informationen, die bei dem Terminal des Anwenders und/oder der Kommunikationsanwendung vorliegen bzw. von dort abrufbar sind, ist eine Datenbank an die Kommunikations- und Steuerschnittstelle angeschlossen. Diese kann zum Importieren, Aktualisieren und Exportieren von Daten einen Anschluss für eine externe Datenbank aufweisen.

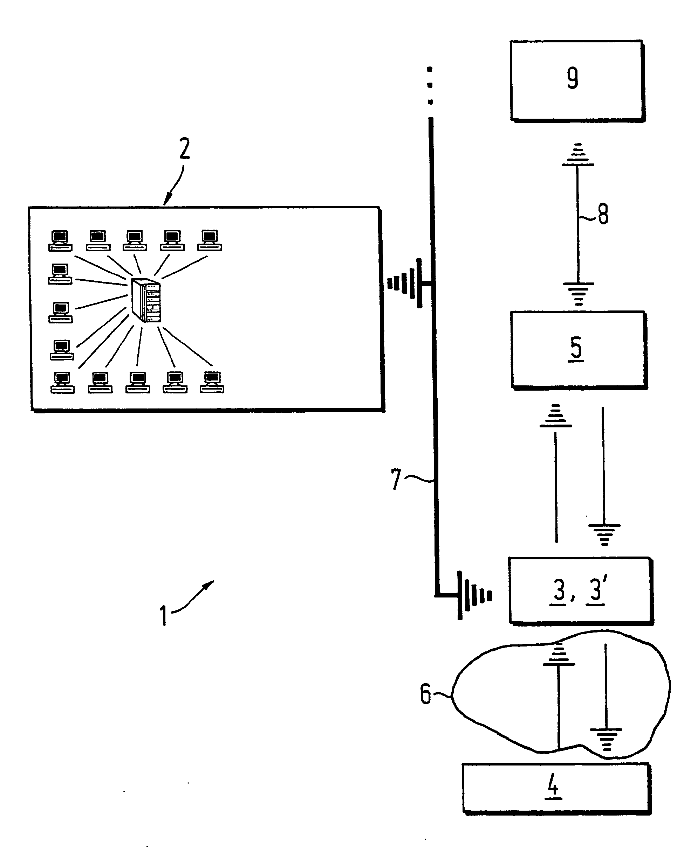

Die Erfindung wird nachfolgend anhand von Ausführungsbeispielen und der Zeichnung näher beschrieben.

Die einzige Figur zeigt schematisch den Aufbau des erfindungsgemäßen Systems zur Steuerung einer Kommunikationsanwendung.

Das System 1 zur Steuerung einer Kommunikationsanwendung 2 weist eine zentrale Kommunikations- und Steuerschnittstelle 3' auf, die mit der Kommunikationsanwendung 2, einem Anwender 4 und einer Datenbank 5 verbunden ist.

Die zentrale Kommunikations- und Steuerschnittstelle 3' ist als zentrale Programmanwendung 3 auf einer nicht dargestellten Computereinrichtung ausgebildet. Die zentrale Programmanwendung 3 weist eine Verbindungsschnittstelle zu einem vorzugsweise externen Datennetz 6, wie dem Internet, auf, über das die zentralen Programmanwendung 3 mit einem Terminal eines Anwenders 4 in Verbindung steht. Die Verbindung 7 zwischen der zentralen Programmanwendung 3 und der Kommunikationsanwendung 2 ist vorzugsweise ein internes Netzwerk oder eine Direktverbindung bspw. via ISDN. So wird ein reibungsloser Datentransfer zwischen der Kommunikationsanwendung 2 und der zentrale Programmanwendung 3 erreicht. Zudem müssen die Daten nicht gegen unbefugten Zugriff von Dritten in einem externen Netz geschützt werden. Eine Verbindung über das Internet oder ein vergleichbares externes, öffentliches Netz ist jedoch prinzipiell auch möglich.

Die Datenbank 5 ist vorzugsweise in derselben Computereinrichtung angeordnet wie die zentrale Programmanwendung 3. Der Datentransfer zwischen der Datenbank 5 und der zentralen Programmanwendung 3 kann dann besonders schnell über einen internen Datenbus erfolgen, so dass bei Anfragen des Anwenders 4 oder der Kommunikationsanwendung 2 nur kurze Zugriffszeiten auf die Datenbank 5 bestehen. Zusätzlich weist die Datenbank einen Anschluss 8 an eine externe Datenbank 9 auf, von der aus die für die Kommunikationsanwendung benötigten Daten direkt in die Datenbank 5 importiert oder aktualisiert werden können. Die externe Datenbank 9 steht bspw. bei dem Auftraggeber, der eine Telemarketingaktion bestellt. Die dafür notwendigen Daten überträgt er dann bspw. über einen ISDN-Anschluss 8 auf die Datenbank 5, wobei ggf. eine notwendige Konvertierung der Daten vorgenommen wird. Während oder nach der Telemarketingaktion können die auf der Datenbank 5 aktualisierten Daten wieder zu der externen Datenbank 9 exportiert werden, so dass dem Auftraggeber ein aktualisierter Datensatz für seine Arbeit zur Verfügung steht. Der Anwender hat über das Internet die Möglichkeit, sich jederzeit über den Status der Telemarketingaktion zu informieren oder Ergebnisse und Statistiken abzurufen.

Nachfolgend wird das Verfahren zur Steuerung der Kommunikationsanwendung 2 im Detail beschrieben.

Ein autorisierter Anwender 4 loggt sich von seinem Anwenderterminal über das Internet 6 mit seinem Kennwort in die zentrale Programmanwendung ein. Von dort hat er menügeführt Zugriff auf seine in der Datenbank 5 abgespeicherten Informationen. Diese umfassen seine persönlichen Daten, Kundendaten, Termindaten oder sonstige Informationen, die für die Ausführung der Kommunikationsanwendung 2 notwendig sind, wie bspw. Formbriefe oder Textbausteine für Brief- und Mailing-Center. Ebenso kann er in der Programmanwendung ihm zugeordnete Projekte bearbeiten, indem er bspw. die Bedingungen für die Kundenauswahl neu definiert, wobei er aus verschiedenen vorgegebenen Selektionskriterien auswählen oder diese neu erstellen kann, Kunden aus der diesem Projekt zugeordneten Kundenliste streicht oder Terminvorgaben für eine Terminvereinbarung mit Kunden in einer dafür vorgesehenen Terminmaske einträgt, in der sowohl der Zeitpunkt als auch die Region für einzelne Termine vorbestimmt werden. Auch kann er ein völlig neues Projekt anlegen, wobei er obligatorische Angaben bspw. zu den auszuwählenden Kunden machen muss, bevor das Projekt zur Anwendung zur Verfügung steht. Diese Bearbeitung kann von dem Anwender online durchgeführt werden. Die geänderten Daten stehen nach der Bearbeitung dem gesamten System sofort zur Verfügung.

Daher hat jeder Anwender die Möglichkeit, auch bei ihm vorgegebenen Projekten individuelle Anpassungen vorzunehmen, ohne dass ein zusätzlicher hoher Bearbeitungsaufwand bei der Ausführung der Telekommunikationsanwendung erforderlich wird.

Sobald der Anwender 4 die Ausführung eines seiner Projekte in der Kommunikationsanwendung 2 wünscht, gibt er der zentralen Programmanwendung 3 einen entsprechenden Auftrag. Diese ändert den Projektstatus dieses Projekts in "Warten auf Projektstart" und überträgt über die Verbindung 7 einen Steuerungsbefehl zu der Kommunikationsanwendung 2. Dadurch wird das Projekt mit den erforderlichen Projektdaten in eine Liste auszuführender Projekte eingestellt, die von der Kommunikationsanwendung 2 abgearbeitet wird. Sobald das Projekt bearbeitet wird, sendet die Kommunikationsanwendung 2 einen Steuerungsbefehl an die zentrale Programmanwendung 3, die daraufhin den Projektstatus in "aktiv" ändert. Auch in der Kommunikationsanwendung 2 erzielte Ergebnisse werden an die zentrale Programmanwendung 3 übertragen und in die Datenbank 5 eingearbeitet. Dabei aktualisiert die zentrale Programmanwendung 3 die Projektstatistik, über die sich der Anwender 4 jederzeit durch Einloggen in die zentrale Programmanwendung 3 informieren kann.

Wenn der Anwender 4 während der Abarbeitung des Projektes in der Kommunikationsanwendung 2 das Projekt verändern oder abbrechen möchte, übermittelt er der zentralen Programmanwendung 3 einen entsprechenden Befehl, die ihrerseits einen Steuerungsbefehl an die Kommunikationsanwendung 2 richtet. Die Kommunikationsanwendung 2 stoppt dann das auszuführende Projekt und stellt es in eine Wartestellung, wenn das Projekt unterbrochen wurde, oder löscht es ganz aus der Liste der abzuarbeitenden Projekte, wenn das Projekt beendet wurde.

Nachfolgend wird dieser Prozess noch einmal konkret am Beispiel eines Call-Centers beschrieben. Der Anwender 4 teilt einem Projekt in der zentralen Programmanwendung 3 eine bestimmte Kundenliste zu und gibt an, dass die Telefonberater die anzurufenden Kunden über ein neuartiges Produkt informieren und erfragen sollen, ob Interesse an diesem Produkt besteht. Ggf. soll ein Termin für einen Besuch des Anwenders bei dem Kunden vereinbart werden. Nachdem der Anwender den Projektstart freigibt, überträgt die zentrale Programmanwendung 3 die Kundenliste als Steuerungsbefehl an das Call-Center (Kommunikationsanwendung 2), das mit der Abarbeitung des Projektes beginnt. Die Telefonberater rufen nun bei den vorgegebenen Kunden an und machen Notizen über den Gesprächsverlauf und das Gesprächsergebnis. Diese werden von dem Call-Center über die zentrale Programmanwendung 3 in die Datenbank 5 übertragen, so dass dort sofort nach der Eingabe aktualisierte Kundendaten zur Verfügung stehen.

Wenn ein Besuch zum Termin des Anwenders bei dem Kunden vereinbart werden soll, fordert das Call-Center über die zentrale Programmanwendung 3 die von dem Anwender 4 eingegebene Terminmaske an, in der die noch verfügbaren Termine gekennzeichnet sind. Sobald der Termin belegt ist, wird dieser Termin der zentralen Programmanwendung 3 übermittelt, die die Terminmaske entsprechend aktualisiert. Danach kann der Termin nicht noch einmal vergeben werden.

Wenn der Anwender 4 die Bearbeitung seines Projektes im Call-Center beendet oder unterbricht, ändert die zentrale Programmanwendung 3 den Projektstatus und übermittelt dem Call-Center einen Stopp-Befehl, wonach in dem Call-Center keine Kunden aus diesen Projekten mehr angerufen werden können. Den Telefonberatern werden dann Kunden aus einem anderen Projekt angezeigt, die angerufen werden sollen.

Das Verfahren ist nicht auf die Steuerung einer bestimmten Kommunikationsanwendung 2 beschränkt. Vielmehr ist es möglich, dass die zentrale Programmanwendung 3 über die Verbindung 7 mit mehreren verschiedenen Kommunikationsanwendungen 2 verbunden ist, die gleichzeitig gesteuert werden können. Dies kann bspw. ein Call-Center und ein Brief- oder Mailing-Center sein. Beim Brief- oder Mailing-Center wählt der Anwender aus mehreren Briefversionen (Kontaktanlässen) aus. Die anschließende Selektion des Kunden erfolgt auf dieselbe Weise wie beim Call-Center. Eine Terminkoordination entfällt, da lediglich der Versendezeitpunkt festgelegt werden muss.

Es ist auch möglich, die in verschiedenen Kommunikationsanwendungen ablaufenden Projekte miteinander zu kombinieren. Bspw. kann abhängig von dem Ergebnis eines Telefonanrufs in dem Call-Center ein entsprechender Formbrief in dem Brief-Center ausgedruckt und versendet werden. So kann im Anschluss an eine Terminvereinbarung automatisch eine schriftliche Terminbestätigung ausgedruckt und abgesandt werden.

Für die Terminbestätigung kann ein in der Programmanwendung gespeicherter Briefbogen des Anwenders verwendet werden, wobei der Anwender auswählen kann, ob die eigene Unterschrift oder die des Telefonberaters verwendet wird. Da somit die Daten des Briefbogens ohnehin in der Programmanwendung gespeichert sind, kann der Anwender über die Programmanwendung bei Bedarf auch eigene Briefbögen drucken lassen, die ihm zur Verfügung gestellt werden. In ähnlicher Weise lassen sich auch Visitenkarten oder andere Druckstücke anfordern. So lassen sich auch Antragsformulare personalisiert drucken.

Insgesamt bietet das Verfahren zur Steuerung von Kommunikationsanwendungen 2 ein Koordinierungsinstrument verschiedener Kommunikationsströme in Echtzeit, mit dem ein Anwender 4 von einem Anwenderterminal aus über das Internet Projekte direkt bearbeiten und steuern kann, die er bei einem Telekommunikationsdienstleister bucht und durchführen lässt.

### Bezugszeichenliste:

- 1: System
- 2: Kommunikationsanwendung
- 3: zentrale Programmanwendung
- 3': zentrale Kommunikations- und Steuerschnittstelle
- 4: Anwender
- 5: Datenbank
- 6: externes Datennetz, Internet
- 7: Verbindung
- 8: Anschluss
- 9: externe Datenbank

## Patentansprüche

1. Verfahren zur Steuerung einer Kommunikationsanwendung (2), bei der von einer zentralen Stelle eine Kommunikationsverbindung zu einer Vielzahl von Kontaktpunkten hergestellt wird, insbesondere eines Call-, Brief- oder Mailing-Centers, wobei ein Anwender (4) über ein externes Netzwerk (6), insbesondere das Internet, auf eine mit der Kommunikationsanwendung (2) verbindbare zentrale Programmanwendung (3) zugreift, wobei die zentrale Programmanwendung (3) Aufträge des Anwenders (4) annimmt und als Steuerungsbefehle zu der Kommunikationsanwendung (2) überträgt, und wobei die Steuerungsbefehle von der Kommunikationsanwendung (2) ausgeführt werden.

2. Verfahren nach Anspruch 1, **dadurch gekennzeichnet, dass** die zentrale Programmanwendung (3) Aktionen der Kommunikationsanwendung (2) startet, unterbricht oder beendet, wobei im übrigen die jeweiligen Aktionen von der Kommunikationsanwendung (2) eigenständig ausgeführt werden.

3. Verfahren nach einem der vorhergehenden Ansprüche, **dadurch gekennzeichnet, dass** Informationen aus der Kommunikationsanwendung (2), wie Ergebnisse, Termine oder Statistiken, an die zentrale Programmanwendung (3) übermittelt und dort von dem Anwender (4) abrufbar sind.

4. Verfahren nach einem der vorhergehenden Ansprüche, **dadurch gekennzeichnet, dass** an die zentrale Programmanwendung (3) eine Datenbank (5) angeschlossen ist, auf die der Anwender (4) und/oder die Kommunikationsanwendung (2) über die zentrale Programmanwendung (3) zum Eingeben und Abrufen von Informationen zugreifen können.

5. Verfahren nach Anspruch 4, **dadurch gekennzeichnet, dass** durch einen direkten Zugang der Datenbank (5) Daten importiert, aktualisiert und/oder exportiert werden.

6. Verfahren nach einem der vorhergehenden Ansprüche, **dadurch gekennzeichnet, dass** die zentrale Programmanwendung (3) verschiedene Projekte eines oder mehrerer Anwender (4) verwaltet, wobei jedem Projekt bestimmte Informationen sowie ein definierter Projektstatus zugeordnet werden, wobei der Projektstatus die Bearbeitung des Projekts in der Programmanwendung (3) und der Kommunikationsanwendung (2) vorgibt.

7. Verfahren nach Anspruch 6, **dadurch gekennzeichnet, dass** von dem Anwender (4) in der zentralen Programmanwendung (3) Projekte definierbar, buchbar und/oder kontrollierbar sind.

8. Verfahren nach einem der Ansprüche 6 oder 7, **dadurch gekennzeichnet, dass** in der zentralen Programmanwendung (3) Projekte vordefiniert sind und einer Vielzahl von Anwendern (4) zur Verfügung gestellt werden.

9. Verfahren nach einem der vorhergehenden Ansprüche, **dadurch gekennzeichnet, dass** die zentrale Programmanwendung (3) eine Terminplanung für den Anwender (4) aufweist, bei der dieser eine Terminmaske mit als frei markierte Zeiten für Termine angibt, wobei diese Terminmaske als Steuerungsparameter zur Kommunikationsanwendung (2) übertragen wird, so dass von der Kommunikationsanwendung (2) nur noch die als frei markierten Termine vergebbar sind.

10. Verfahren nach Anspruch 9, **dadurch gekennzeichnet, dass** die vergebenen Termine geographischen Regionen zugeordnet werden und dass zusätzliche Termine in zeitlicher und geographischer Zuordnung zu den bereits vergebenen Terminen vergeben werden.

11. Verfahren nach einem der vorhergehenden Ansprüche, **dadurch gekennzeichnet, dass** die zentrale Programmanwendung (3) mehrere anschließbare Kommunikationsanwendungen (2) steuert.

12. Computerprogramm mit Programmcode-Mitteln, um das Verfahren gemäß einem der vorhergehenden Ansprüche durchzuführen, wenn das Programm auf einem Computer oder Computernetzwerk ausgeführt wird.

13. Computerprogramm mit Programmcode-Mitteln gemäß Anspruch 12, die auf einem computerlesbaren Datenträger gespeichert sind.

14. System zur Steuerung einer Kommunikationsanwendung (2), insbesondere eines Call-, Brief- oder Mailing-Centers, mit einer zentralen Kommunikations- und Steuerschnittstelle (3'), die über ein externes Netzwerk mit einem Terminal eines Anwenders (4) verbindbar ist und an die eine Kommunikationsanwendung (2) anschließbar ist, wobei die zentrale Kommunikations- und Steuerschnittstelle (3') ein Kommunikationsmodul zum Datenaustausch mit dem Terminal des Anwenders (4), ein Steuermodul zur Übermittlung von in der Kommunikationsanwendung (2) auszuführenden Steuerungsbefehlen und ein Übersetzungsmodul zum Übersetzen von Aufträgen des Anwenders (4) in Steuerungsbefehle für die Kommunikationsanwendung (2) aufweist.

15. System nach Anspruch 14, **gekennzeichnet durch** eine Datenbank (5) zur Verwaltung von Informationen, die in dem Terminal des Anwenders (4) und/oder der Kommunikationsanwendung (2) eingebbar und/oder von dort abrufbar sind.
